# EUROPEAN PATENT SPECIFICATION

(11) **EP 0 595 915 B1**
(45) Date of publication and mention of the grant of the patent: **03.04.1996**
(21) Application number: 92915779.0
(22) Date of filing: 17.07.1992
(51) Int. Cl.: B02C 7/14, G01B 7/14

(54) **METHOD AND DEVICE FOR MEASURING THE DISTANCE BETWEEN TWO MUTUALLY OPPOSING SURFACES BY MEANS OF THE RELUCTANCE METHOD**
Verfahren und Vorrichtung zur Messung des Abstandes zwischen zwei gegenüberliegenden Oberflächen mittels eines Reluktanzverfahrens
PROCEDE ET DISPOSITIF DE MESURE DE LA DISTANCE ENTRE DEUX SURFACES MUTUELLEMENT OPPOSEES A L'AIDE D'UN PROCEDE PAR RELUCTANCE

(30) Priority: 19.07.1991 SE 9102206
(43) Date of publication of application: 11.05.1994
(73) Proprietor: SUNDS DEFIBRATOR INDUSTRIES AKTIEBOLAG, S-851 94 Sundsvall (SE)
(72) Inventor: AKERBLOM, Bengt, S-143 00 VARBY (SE)
(74) Representative: Jörneld, Bo
(86) International application number: SE9200523
(87) International publication number: WO9301886

(56) References cited:
- EP-A- 0 121 007
- US-A- 4 387 339

## Description

### Technical Field

The present invention relates to an improved method and an improved device for measuring the distance between two mutually opposing surfaces by means of the reluctance method. To this end, there is used a position indicator whose measuring device is mounted on an associated core which is mounted on one of the two surfaces, wherein the air gap separating the surfaces forms part of the measuring circuit. The position indicator includes a cylinder which is connected to the core and which, similar to said core, is comprised of a magnetic, highly permeable material.

### Background of the Invention

A method and a device of this kind are known from SE-C 7904903-7 (416 844 & US-A-4,387,339). The position indicator of the known device functions to detect a magnetic field which is closed over the air gap formed between two opposing and mutually spaced surfaces where the distance therebetween is to be determined, through the intermediary of the magnetically conductive material in the opposing surface. The material of the opposing surface is thus a passive circuit element in the magnetic circuit incorporated in the position indicator. The flux paths generated over the air gap have a pronounced curvature or spread, which results in a weak field that makes measuring of air gaps of large widths difficult or impossible to accomplish, i.e. distance measuring when applying the known method and the known device is limited to solely relatively small distance values.

When using the known method and the known device to measure the distance between the grinding discs of a refiner or like apparatus, the measuring result is highly dependent on the extent of wear on the surfaces of the grinding discs. This wear accentuates the path curvature or path spreading of the magnetic flux across the gap between the grinding discs. Similar measuring methods and devices are also known from SE-C 7503505-5 (401 896) and SE-C 7611326-5 (400 379 & DE-A-27,45,880). In these cases, the measuring device has the form of an inductive position indicator which is placed in one of the grinding discs while the other of said grinding discs forms a passively active ferromagnetic body.

### Disclosure of the Invention

One object of the inventive method and the inventive device is to provide a better possibility of determining large distances or large gap widths between two mutually opposing surfaces, irrespective of whether the material in these surfaces is ferromagnetic in itself or not.

A further object of the invention is to provide a method and a device for measuring the distance between grinding discs in refiners and like apparatus which remain unaffected by surface wear on the grinding discs to the greatest possible extent.

These two objects are fulfilled with a method and a device according to the present invention, in that the surface located opposite the surface which incorporates the position indicator is magnetized so as to be magnetically active. This is effected by incorporating a magnetic device in this surface.

Thus, when practicing the inventive method and using the inventive device, the magnetic device on said opposing surface will actively influence the measuring device of the position indicator. This will extend the range of the measuring device, i.e. enable larger gaps or gap widths to be measured. Because the flux paths emanating from the magnetic device in said opposing other surface are essentially straight, there is less dependency on the wear of the two mutually coacting surfaces in the case of refiner grinding discs for instance.

The magnetic device may be either a permanent magnet or an electromagnet.

### Description of Preferred Embodiments

The invention will now be described in more detail with reference to exemplifying embodiments thereof and with reference to the accompanying drawings which illustrate the principles of these embodiments, in which drawings
Figure 1 illustrates a first embodiment of an inventive measuring device intended for measuring the distance between mutually opposing and relatively rotating surfaces;
Figure 2 illustrates a second embodiment of the inventive measuring device, wherein the distance is determined by measuring a static magnetic field;
Figure 3 illustrates a further development of the embodiment illustrated in Figure 2; and
Figure 4 illustrates a further embodiment of the inventive measuring device while using an electromagnet to magnetize the second, opposing surface.

All of the Figures illustrate schematically two surfaces 1, 2 with an intermediate gap 3 whose width B is to be determined. The gap 3 may be an air gap between two grinding discs 1, 2 of a refiner, although they may equally as well be any gap between two surfaces that can be moved relative to one another, as indicated by the double arrow P. Thus, the gap need not necessarily be an air gap, but can be an interspace filled with some other medium or media, either gaseous or liquid.

A measuring device 4 is provided in the one surface 1, for instance mounted in a cavity inwardly of said surface. The measuring device 4 is preferably of a known kind, for instance of the kind described in SE-C 7904903-1 (416 844). Thus, the device may include a core 6 of highly permeable magnetic material and a cylinder 8 comprised of a similar material. The core 6 and the cylinder 8 are mutually connected at the inner part 5 of the measuring device 4, as seen from the gap 3. The space between the core 6 and the walls of the cylinder 8 is filled with material, preferably a magnetically inactive material.

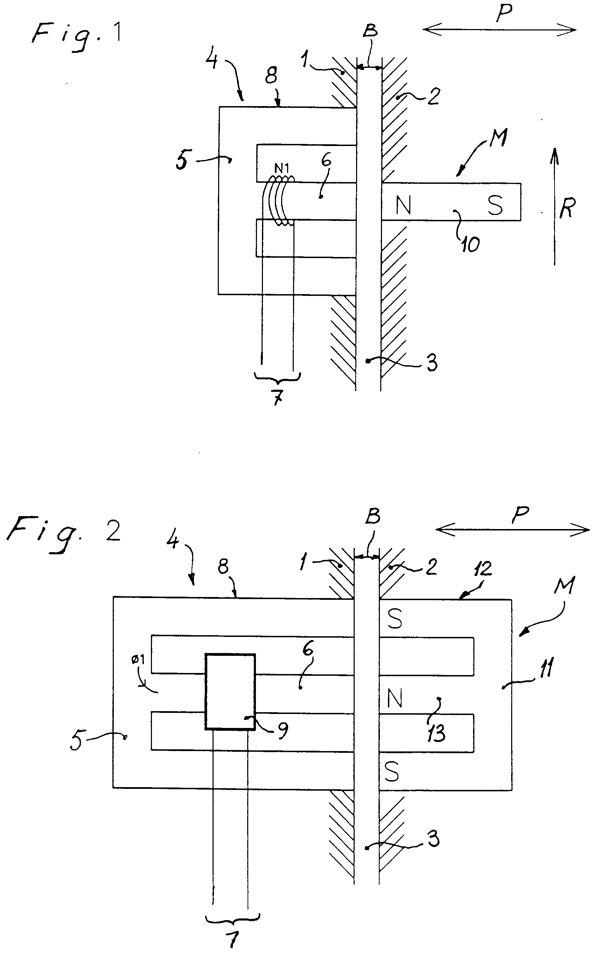

The core 6 carries a measuring device, which in the embodiment of Figure 1 is comprised of a winding N1. The magnetic field detected by the winding N1 gives rise to a signal on the electric outputs 7 of the winding. This signal can be used in known manner (not shown in detail) to indicate the distance between the surfaces defining the gap 3 or the width B of said gap. The possibility of determining the distance B with the aid of this simple winding or coil N1 is afforded because the opposing, second surface 2 is magnetically active, i.e. because it is provided with a magnetic device M. In the case of the illustrated embodiment, this magnetic device has the form of a permanent rod-like magnet 10 which is placed generally perpendicular to the gap 3 and in line with the core 6 incorporated in the opposing one surface 1.

A further condition for determining the distance B with the aid of the magnetic-field-detecting winding N1 is that the surfaces 1, 2 move relative to one another as indicated by the arrow R. In the case of refiners, the relative movement R is the relative rotational movement of respective grinding discs 1, 2. This relative movement will induce an electromotive force, emf, in the winding N1, which then produces an electric signal on the output 7. The amplitude of the signal constitutes a measurement of the width B of the gap 3 and can thus be indicated directly in terms of the gap width B with the aid of a suitably graduated instrument (not shown) connected to the output 7.

Figure 2 illustrates a second embodiment of the inventive device. In the case of this embodiment, the measuring device comprises conventionally a Hall-element 9 which is fitted on the core 6 of the measuring device 4 mounted on the one surface 1. The other, opposing surface 2, carries the magnetic device M, which also comprises a permanent magnet 11, although in this case the magnet has a cylindrical shape corresponding to the shape of the measuring device 4. The cylindrical casing 12 of the permanent magnet 11 lies in line with the cylinder 8 of the measuring device 4. A leg 13 on the permanent magnet 11 is placed in line with the core 6 of the measuring device 4. The one pole S of the permanent magnet 11 is formed by the casing 12, while the other pole N is formed by the leg 13.

The measuring device illustrated in Figure 2 enables the gap width B to be determined even when conditions between the surfaces 1, 2 are static. In this case, the Hall-element 9 measures the static magnetic field Ø1 which is generated by the permanent magnet 11 in the measuring device 4. The strength of the static field Ø1 constitutes a measurement of the distance B between the surfaces 1, 2, and a corresponding electric voltage signal can be taken out from the output 7 of the Hall-element 9.

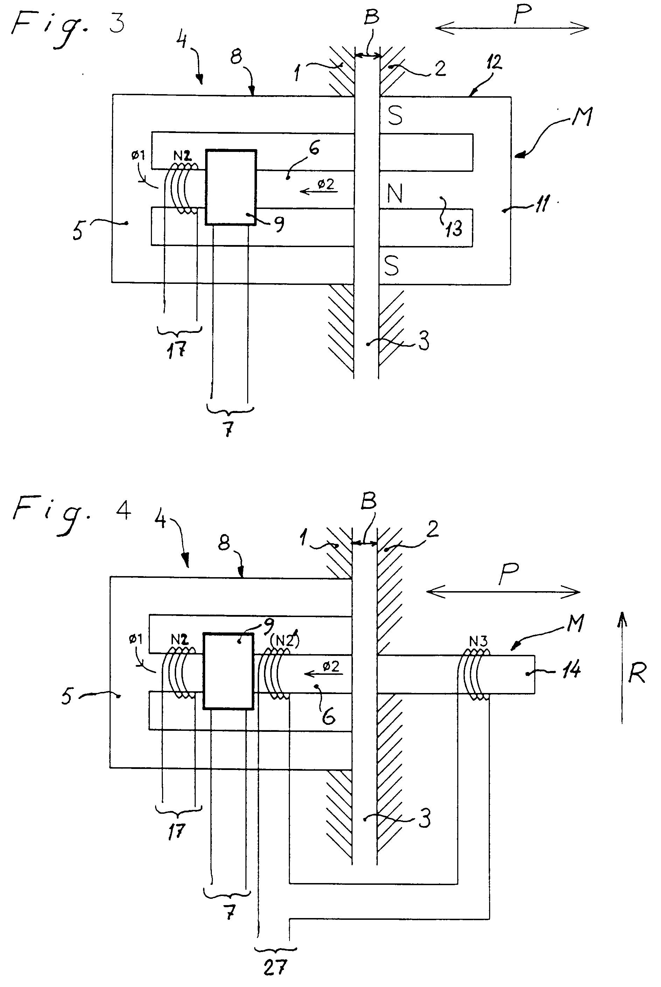

Figure 3 illustrates a further development of the measuring device shown in Figure 2. In this case, the static magnetic field Ø1 measured with the Hall-element 9 is balanced out by a coil or winding N2 which generates a counter-directed magnetic field Ø2, so that the total magnetic field Ø1+(-Ø2) will endeavour to assume a zero value. This is achieved by using the signal on the output 7 of the Hall-element 9 to produce an input signal on the input 17 of the winding N2, so that the winding N2 will generate the desired counter-directed magnetic field Ø2. The current value of the electric input signal will therewith constitute a measurement of the distance B between the surfaces 1, 2.

When the surfaces 1, 2 move relatively to one another, it is advantageous to generate an alternating current, for instance as described in SE-C 7904903-7 (416 844). In this case, two magnetic devices whose poles are reversed in relation to one another are preferably used as alternating field generators.

The magnetic device M may also have the form of an electromagnet 14, as illustrated in Figure 4. The electromagnet 14 has a coil or winding N3, which may optionally be connected electrically in series with an auxiliary coil or winding N2' on the core 6 of the measuring device 4. This auxiliary coil N2' generates a magnetic field which is added to the counter-directed field Ø2 in dependence on the size and direction of the supply current delivered to the coil N3 of the electromagnet 14 via the input 27. When a constant current is supplied, the aforedescribed method is preferably alternated.

The present invention places no particular demands on magnetic conductance of the materials from which the surfaces 1, 2 are formed, and this material can be fully adapted to other properties required of the apparatus or machine in which these surfaces 1, 2 are included.

Although the invention has been described with reference to preferred, exemplified embodiments thereof illustrated in the drawings, it will be understood by those skilled in this art that different variations and modifications can be made without departing from the inventive concept. Consequently, the invention should not be considered restricted to the illustrated exemplifying embodiments thereof, since other embodiments included in the scope of the following Claims are also conceivable.

## Claims

1. A method for measuring the distance between two mutually opposing surfaces (1, 2) by means of the reluctance method, with the aid of a measuring device (4) which is mounted on a core (6) of a position indicator at the one surface (1), so that the gap (3) which separates the surfaces is included as a part of the measuring circuit and such that the width (B) of the gap constitutes the distance to be measured, **characterized** by magnetizing the other (2) of the two opposing surfaces (1, 2) so as to be magnetically active for generating in the measuring device (4) at said one surface (1) an electric signal which is representative of the distance (B) between the two mutually opposing surfaces (1, 2).

2. A method according to Claim 1, **characterized** in that the two mutually opposing surfaces (1, 2) move relatively to one another (R), wherein an electromotive force is generated in the measuring device (4), which includes a winding (N1), and wherein the amplitude of the electric signal taken from the winding constitutes a measurement of the distance (B) to be measured.

3. A method according to Claim 1**, characterized** in that magnetization of said other surface (2) generates a static field (Ø1) in the measuring device (4), which includes a Hall-element (9) which generates the electric signal whose voltage is representative of the measured field strength and therewith of the distance (B) to be measured.

4. A method according to Claim 3, **characterized** in that the static field (Ø1) measured by a Hall-element (9) is balanced with an input reference field (Ø2), so that the field through the Hall-element will be equal to zero, due to adjustment of the current to the device (N2) which generates the reference field, wherein the current adjustment value constitutes a measurement of the distance (B) to be measured.

5. A method according to Claim 4, **characterized** in that the two mutually opposing surfaces (1, 2) move relatively to one another (R), wherein the current to the device (N2) which generates the reference field (Ø2) is alternated to produce an alternating reference field.

6. A method according to Claim 1 and 5, **characterized** in that magnetization of said surface (2) is effected by means of an electromagnet (14) to which constant current is supplied, said current being alternated correspondingly to the current delivered to the reference-field-generating device (N2, N2').

7. A device for measuring the distance (B) between two mutually opposing surfaces (1, 2) by means of the reluctance method, said device comprising a measuring device (4) mounted on a core (6) of a position indicator at the one surface (1), said position indicator including a cylinder (8) which is connected to the core and which, similar to the core, is made of a magnetic, highly permeable material, **characterized** in that the other (2) of said two mutually opposing surfaces (1, 2) is provided with a magnetic device (M) for generating in the measuring device (4) at said one surface (1) an electric signal which is representative of the distance (B) between the two mutually opposing surfaces (1, 2).

8. A device according to Claim 7, **characterized** in that the magnetic device (M) is an electromagnet (14).

9. A device according to Claim 7 or 8, **characterized** in that the magnetic device has the form of a winding or coil (N1) in which an electromotive force is induced by means of the magnetic device (M) when the two mutually opposing surfaces (1, 2) move relative to one another (R), so that an electric signal can be taken from the winding, said signal having an amplitude whose magnitude constitutes a measurement of the distance to be measured.

10. A device according to Claim 7, **characterized** in that the measuring device (4) has the form of a Hall-element (9) and the magnetic device (M) has a form which corresponds to the form of the position indicator and is comprised of a permanent magnet (11) whose one magnetic pole (N) is disposed in line with the core (6) of the position indicator, wherein a static magnetic field can be measured by the Hall-element, the electric output signal of which is representative of the distance to be measured.

11. A device according to Claim 8 or 10, **characterized** by a balancing coil (N2) on the core (6), for equalizing the static magnetic field (Ø1) generated by the Hall-element (9), wherein the electric signal taken from the Hall-element is compared with a reference signal delivered to the balancing coil and wherein the different signal obtained with this comparison constitutes a measurement of the distance to be measured.

12. A device according to any one of Claims 8, 9 and 11, **characterized** in that the electromagnet (14) is supplied with a constant current and is intended to generate an alternating magnetic field, wherein two balancing coils (N2, N2') are mounted on the core (6), of which coils one, (N2'), is supplied with current from the same source as the coil (N3) of the electromagnet.

## Patentansprüche

1. Verfahren zur Messung des Abstandes zwischen zwei einander gegenüberliegenden Oberflächen (1, 2) mittels der Reluktanzmethode unter Verwendung einer Meßeinrichtung (4), die auf einem Kern (6) eines Positionsanzeigers an der einen Fläche (1) angebracht ist, so daß der die beiden Flächen trennende Spalt (3) als ein Teil des Meßkreises eingeschlossen ist, wobei die Breite (B) des Spaltes den zu messenden Abstand darstellt, gekennzeichnet durch Magnetisierung der anderen (2) der beiden gegenüberliegenden Flächen (1, 2), so daß diese magnetisch aktiv wird, um in der Meßeinrichtung (4) der genannten ersten Fläche (1) ein elektrisches Signal zu erzeugen, welches für den Abstand (B) zwischen den beiden einander gegenüberliegenden Oberflächen (1, 2) repräsentativ ist.

2. Verfahren nach Patentanspruch 1, dadurch gekennzeichnet, daß die beiden einander gegenüberliegenden Oberflächen (1, 2) sich relativ zueinander bewegen (R), wobei eine elektromotorische Kraft in der Meßeinrichtung (4) erzeugt wird, die eine Wicklung (N1) umfaßt, und wobei die Amplitude des von der Wicklung abgenommenen elektrischen Signals ein Maß für den zu messenden Abstand (B) darstellt.

3. Verfahren nach Patentanspruch 1, dadurch gekennzeichnet, daß die Magnetisierung der genannten anderen Fläche (2) ein statisches Feld (Ø1) in der Meßeinrichtung (4) erzeugt, die ein Hall-Element (9) umfaßt, welches das elektrische Signal erzeugt, dessen Spannung für die gemessene Feldstärke und somit für den zu messenden Abstand (B) repräsentativ ist.

4. Verfahren nach Patentanspruch 3, dadurch gekennzeichnet, daß das durch ein Hall-Element (9) gemessene statische Feld (Ø1) mit einem Eingangs-Referenzfeld (Ø2) ausgeglichen ist, so daß das Feld des Hall-Elementes durch Einstellung des Stromes zu der das Referenzfeld erzeugenden Einrichtung (N2) gleich Null wird, wobei der Stromeinstellwert ein Maß für den zu messenden Abstand (B) darstellt.

5. Verfahren nach Patentanspruch 4, dadurch gekennzeichnet, daß die beiden einander gegenüberliegenden Flächen (1, 2) sich relativ zueinander (R) bewegen, wobei der Strom zu der das Referenzfeld (Ø2) erzeugenden Einrichtung (N2) alterniert wird, um ein wechselndes Referenzfeld zu erzeugen.

6. Verfahren nach Patentanspruch 1 und 5, dadurch gekennzeichnet, daß die Magnetisierung der genannten Oberfläche (2) mittels eines Elektromagneten (14) bewirkt wird, dem ein konstanter Strom zugeführt wird, der entsprechend dem der Referenzfeld-Erzeugungseinrichtung (N2, N2') zugeführten Strom alterniert wird.

7. Vorrichtung zur Messung des Abstandes (B) zwischen zwei einander gegenüberliegenden Oberflächen (1, 2) mittels der Reluktanzmethode, welche Vorrichtung eine Meßeinrichtung (4) umfaßt, die auf einem Kern (6) eines Positionsanzeigers an der einen Fläche (1) angebracht ist, wobei der Positionsanzeiger einen Zylinder (8) aufweist, der mit dem Kern verbunden ist und ähnlich wie der Kern selbst aus einem magnetischen, hoch permeablen Material hergestellt ist, dadurch gekennzeichnet, daß die andere der beiden einander gegenüberliegenden Flächen (1, 2) mit einer Magnetisiereinrichtung (M) zur Erzeugung eines elektrischen Signals in der Meßeinrichtung (4) an der einen Oberfläche (1) versehen ist, welches Signal für den Abstand (B) zwischen den beiden einander gegenüberliegenden Flächen (1, 2) repräsentativ ist.

8. Vorrichtung nach Patentanspruch 7, dadurch gekennzeichnet, daß die Magnetisiereinrichtung (M) ein Elektromagnet (14) ist.

9. Vorrichtung nach Patentanspruch 7 oder 8, dadurch gekennzeichnet, daß die Magnetisiereinrichtung die Form einer Wicklung oder Spule (N1) aufweist, in der mittels der Magnetisiereinrichtung (M) eine elektromotorische Kraft induziert wird sobald sich die beiden einander gegenüberliegenden Flächen (1, 2) relativ zueinander (R) bewegen, wobei von der Wicklung ein elektrisches Signal abgenommen werden kann, das eine Amplitude hat, deren Größe ein Maß für den zu messenden Abstand darstellt.

10. Vorrichtung nach Patentanspruch 7, dadurch gekennzeichnet, daß die Meßeinrichtung (4) die Form eines Hall-Elementes (9) und die Magnetisiereinrichtung (M) eine Form aufweist, die der Form des Positionsanzeigers entspricht und einen Permanentmagneten (11) umfaßt, dessen einer Magnetpol (N) in Linie mit dem Kern (6) des Positionsanzeigers angeordnet ist, wobei durch das Hall-Element ein statisches Magnetfeld meßbar ist, dessen elektrisches Ausgangssignal den zu messenden Abstand repräsentiert.

11. Vorrichtung nach Patentanspruch 8 oder 10, gekennzeichnet durch eine Ausgleichsspule (N2) auf dem Kern (6) zum Ausgleichen des durch das Hall-Element (9) erzeugten statischen Magnetfeldes (Ø1), wobei das vom Hall-Element abgenommene elektrische Signal mit einem der Ausgleichsspule zugeführten Referenzsignal verglichen wird und das mit diesem Vergleich erhaltene Differenzsignal ein Maß für den zu messenden Abstand darstellt.

12. Vorrichtung nach einem der Patentansprüche 8, 9 und 11, dadurch gekennzeichnet, daß der Elektromagnet (14) mit einem konstanten Strom gespeist ist und ausgebildet ist, um ein wechselndes Magnetfeld zu erzeugen, wobei zwei Ausgleichsspulen (N2, N2') auf dem Kern (6) angebracht sind, von denen eine (N2') mit Strom aus der selben Quelle wie die Spule (N3) des Elektromagneten gespeist ist.

## Revendications

1. Procédé pour mesurer la distance entre deux surfaces mutuellement opposées (1,2) au moyen d'un procédé par reluctance, à l'aide d'un dispositif de mesure (4) qui est monté sur un noyau (6) d'un indicateur de position sur l'une (1) des surfaces, de manière que l'intervalle (3) qui sépare les surfaces soit incorporé en tant qu'une partie du circuit de mesure et que la largeur (B) de l'intervalle constitue la distance devant être mesurée, caractérisé par la magnétisation de l'autre (2) les deux surfaces opposées (1,2) pour qu'elle soit magnétiquement active afin de générer dans le dispositif de mesure (4) sur ladite surface (1) un signal électrique qui est représentatif de la distance (B) entre les deux surfaces mutuellement opposées (1,2).

2. Procédé selon la revendication 1, caractérisé en ce que les deux surfaces mutuellement opposées (1,2) se déplacent l'une par rapport à l'autre (R), une force électromotrice étant générée dans le dispositif de mesure (4), qui comprend un enroulement (N1) et, l'amplitude du signal électrique extrait de l'enroulement constitue une mesure de la distance (B) à mesurer.

3. Procédé selon la revendication 1, caractérisé en ce qui la magnétisation de ladite autre surface (2), génère un champ statique (φ1) dans le dispositif de mesure (4) qui comprend un élément Hall (9) lequel génère le signal électrique dont la tension est représentative de la force du champ mesuré et donc de la distance (B) devant être mesurée.

4. Procédé selon la revendication 3, caractérisé en ce que le champ statique (φ1) mesuré par un élement Hall (9) est équilibré par un champ de référence d'entrée (φ2) de manière que le champ au-travers de l'élément Hall soit égal à zéro, par suite du réglage du courant vers le dispositif (N2) qui génère le champ de référence, la valeur de réglage du courant constituant une mesure de la distance (B) à mesurer.

5. Procédé selon la revendication 4, caractérisé en ce que les deux surfaces mutuellement opposées (1,2) se déplacent l'une par rapport à l'autre (R), le courant vers le dispositif (N2) qui génère le champ de référence (φ2) étant alterné afin de produire un champ de référence alternatif.

6. Procédé selon les revendications 1 et 5, caractérisé en ce que la magnétisation de ladite surface (2) est réalisée à l'aide d'un électro-aimant (14) alimenté par un courant constant, ledit courant alterné en correspondance au courant délivré au dispositif générant le champ de référence (N2, N2').

7. Dispositif pour mesurer la distance (B) entre deux surfaces mutuellement opposées (1,2) au moyen du procédé par reluctance, ledit dispositif comprenant un dispositif de mesure (4) monté sur un noyau (6) d'un indicateur de position sur l'une (1) des surfaces, ledit indicateur de position incluant un cylindre (8) qui est connecté au noyau et qui, de même que le noyau, est constitué d'un matériau magnétique, hautement perméable, caractérisé en ce que l'autre (2) des deux surfaces mutuellement opposées (1,2) est munie d'un dispositif magnétique (M) pour générer dans le dispositif de mesure (4), ou ladite surface (1) un signal électrique qui est représentatif de la distance (B) entre les deux surfaces mutuellement opposées (1,2).

8. Dispositif selon la revendication 7, caractérisé en ce que le dispositif magnétique (M) est un électro-aimant (14).

9. Dispositif selon la revendication 7 ou 8, caractérisé en ce que le dispositif magnétique présente la forme d'un enroulement ou d'une bobine (N1), dans lequel une force électro motrice est induite à l'aide d'un dispositif magnétique (M) lorsque les deux surfaces mutuellement opposées (1,2) se déplacent l'une par rapport à l'autre (R), de manière qu'un signal électrique puisse être extrait de l'enroulement, ledit signal ayant une amplitude dont la valeur constitue une mesure de la distance à mesurer.

10. Dispositif selon la revendication 7 caractérisé en ce que le dispositif de mesure (4) présente la forme d'un élément Hall (9) et le dispositif magnétique (M) possède une forme qui correspond à la forme de l'indicateur de position et il comprend un aimant permanent (11) dont un pôle magnétique (M) est disposé en ligne avec le noyau (6) de l'indicateur de position, un champ magnétique statique pouvant être mesuré par l'élément Hall dont le signal de sortie électrique est représentatif de la distance à mesurer.

11. Dispositif selon la revendication 8 ou 10, caractérisé en ce qu'il comporte une bobine d'équilibrage (N2) sur le noyau (6), pour égaliser le champ magnétique statique (φ1) généré par l'élément Hall (9), le signal électrique extrait de l'élément Hall étant comparé à un signal de référence délivré à la bobine d'équilibrage et le signal différent obtenu par cette comparaison constitue une mesure de la distance à mesurer.

12. Dispositif selon l'une quelconque des revendications 8, 9 et 11, caractérisé en ce que l'électro amant (14) est alimenté par un courant constant et il est conçu de manière à générer un champ magnétique alternatif, deux bobines d'équilibrage (N2, N2') étant montées sur le noyau (6), l'une (N2') desdites bobines étant alimentée par du courant provenant de la même source que la bobine (N3) de l'électro aimant.
